Europäisches Patentamt

European Patent Office

Office européen des brevets

(11) Publication number: **0 370 727**
**A1**

# EUROPEAN PATENT APPLICATION

(21) Application number: 89311999.0

(22) Date of filing: 20.11.89

(51) Int. Cl.5: **H02B 1/32**

(30) Priority: 22.11.88 GB 8827274

(43) Date of publication of application:
**30.05.90 Bulletin 90/22**

(84) Designated Contracting States:
**AT BE CH DE ES FR GB GR IT LI LU NL SE**

(71) Applicant: **BICC Public Limited Company**
**Devonshire House Mayfair Place**
**London W1X 5FH(GB)**

(72) Inventor: **Tidlund, Olav**
**Siegfriedsvägen 17**
**S-12650 Hargersten(SE)**

(74) Representative: **Ross Gower, Edward Lewis et al**
**BICC Group Patents & Licensing Department**
**Network House 1 Ariel Way**
**London W12 7SL(GB)**

(54) Enclosure for electrical and/or electronic apparatus.

(57) The internal width of and hence the floor area required by an enclosure 1 housing electrical apparatus of a given depth are reduced as compared with known enclosures housing the same apparatus by use of an improved swing frame 5 which supports the apparatus and is pivotally mounted with respect to a side wall 4 of the enclosure by hinge assemblies 6. Each hinge assembly comprises a rigid elongate link 7 which, at one of its ends, is pivotally mounted with respect to the side wall 4 about a fixed vertical axis 8 adjacent the wall and near the front face 2 of the enclosure and which, at its other end, is pivotally mounted with respect to the swing frame about a vertical axis 10 fixed with respect to the frame at or near the adjacent corner of the frame.

## ENCLOSURE FOR ELECTRICAL AND/OR ELECTRONIC APPARATUS

This invention relates to cabinets, cases and other enclosures housing electrical and/or electronic apparatus.

The invention is particularly concerned with enclosures of this kind in which electrical and/or electronic apparatus is directly or indirectly supported on a frame which is separately formed with respect to the enclosure and which is pivotally mounted with respect to a side wall of the enclosure about a substantially vertical axis adjacent to the side wall near the front face of the enclosure. For convenience, such a frame will hereinafter be referred to as a "swing frame".

When electrical and/or electronic apparatus is directly or indirectly supported on a swing frame, for example in a supplementary casing secured to the rear face of the swing frame or on a substantially horizontal shelf extending rearwardly from the rear face of the swing frame, in order to utilise the space available in the enclosure to substantially the fullest possible extent, it is desirable that the supplementary casing, the horizontal shelf and/or the apparatus supported by the swing frame extends substantially the full depth of the enclosure. However, when the depth of the supplementary casing, the horizontal shelf and/or the apparatus supported by the swing frame exceeds the width of the swing frame, the internal width of the enclosure has to be such as to allow the supplementary casing, the horizontal shelf and/or the apparatus supported by the swing frame to pass freely through the open front face of the enclosure when the swing frame is partially rotated about its vertical pivotal axis to render the apparatus supported by the swing frame readily accessible. In other words, the greater the depth of the supplementary casing, the horizontal shelf and/or the apparatus supported by a swing frame, the greater the distance by which the internal width of the enclosure must exceed the width of the swing frame.

From the point of view of the user, an enclosure housing a swing frame as hitherto proposed and used has three major disadvantages. First, since the internal width of the enclosure must exceed the width of the swing frame to a substantial extent, for example an enclosure housing a swing frame having a width of 490mm and supporting a supplementary casing having a depth of 525mm must have an internal width of at least 712mm, there is a substantial volume of space within the enclosure which is not utilised; secondly, the additional material employed in making the enclosure of sufficient width to accommodate free pivotal movement of the swing frame and the apparatus it supports is responsible for a substantial proportion of the overall cost of the enclosure; and, thirdly, the excessive floor area taken up by the enclosure is expensive, especially in office or factory accommodation where the rent or rates per square unit area is high.

It is an object of the present invention to provide, in an enclosure housing electrical and/or electronic apparatus, an improved swing frame which is so pivotally mounted with respect to a side wall of the enclosure that, when supporting a supplementary casing, horizontal shelf and/or electrical and/or electronic apparatus of a given depth, the internal width of the enclosure and, hence, the floor area required by the enclosure are substantially reduced as compared with the internal width of and floor area required by an enclosure having a swing frame of the same width and supporting the same equipment as the improved swing frame but pivotally mounted with respect to a side wall of the enclosure by hinge assemblies hitherto proposed and used.

According to the invention, the improved swing frame is pivotally mounted with respect to a side wall of the enclosure by at least one hinge assembly comprising at least one substantially rigid elongate link which, at one of its ends, is pivotally mounted with respect to said side wall about a fixed substantially vertical axis (hereinafter referred to as the "fixed pivotal axis") adjacent said side wall and near the front face of the enclosure and which, at the other of its ends, is pivotally mounted with respect to the swing frame about a substantially vertical axis fixed with respect to the swing frame (hereinafter referred to as the "movable pivotal axis") at or near the adjacent corner of the swing frame.

To remove the improved swing frame from the enclosure to provide access to electrical and/or electronic apparatus supported on the frame, the swing frame is first drawn forward towards the front face of the enclosure with the front face of the swing frame substantially parallel to the front face of the enclosure so that the or each rigid link of the hinge assembly or assemblies pivots in the same rotational direction both about the fixed pivotal axis and about the movable pivotal axis until the or each rigid link lies substantially parallel to said side wall of the enclosure and then, with the or each rigid link maintained substantially stationary, the swing frame is then rotated with respect to the or each rigid link about the movable pivotal axis to swing the electrical and/or electronic apparatus supported by the frame out of the enclosure and so provide access thereto.

The extent to which the internal width of the enclosure must exceed the width of the swing frame is determined by the length of the or each rigid link. Preferably, the fixed pivotal axis is positioned inwardly from the front face of the enclosure and the or each rigid link is of such a length that, when the link lies substantially parallel to said side wall of the enclosure, the link protrudes beyond the front face of the enclosure and the movable pivotal axis is positioned outside the enclosure. Preferably, also, the movable pivotal axis is so fixed with respect to the swing frame that it lies outside the swing frame in a plane bisecting said adjacent corner of the frame.

In addition to enabling the internal width of and the floor area required by an enclosure to be substantially reduced as compared with the internal width of and the floor area required by an enclosure having a swing frame of the same width and supporting the same equipment as the improved swing frame but pivotally mounted with respect to a side wall of the enclosure by hinge assemblies hitherto proposed and used, the improved swing frame also enables a reduction to be made in the amount of material employed in manufacture of the enclosure, thereby reducing manufacturing costs, and a reduction to be made in the volume of space within the enclosure which is not utilised.

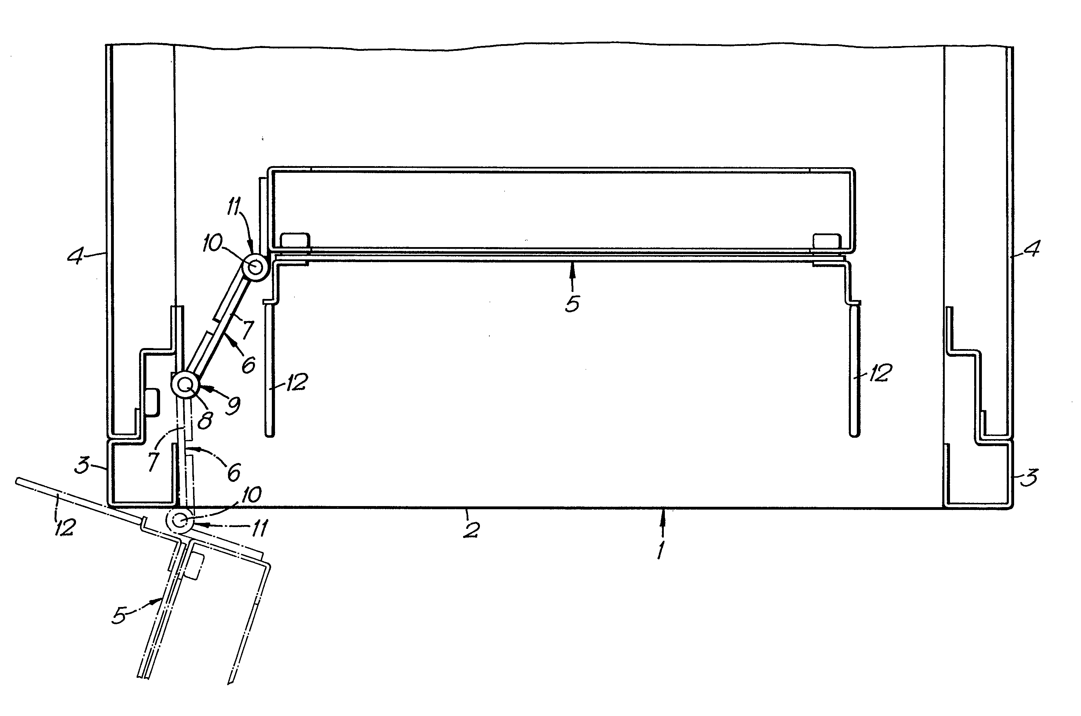

The invention is further illustrated by a description, by way of example, of a preferred enclosure housing electrical and/or electronic apparatus directly or indirectly supported on the improved swing frame with reference to the accompanying drawing which shows a fragmental plan view of the enclosure and improved swing frame.

Referring to the drawing, the preferred enclosure 1 includes a front face 2 and, secured to substantially vertical support members 3 at each side edge of the front face, a pair of opposed substantially parallel side walls 4. Electrical and/or electronic apparatus (not shown) is directly or indirectly supported on the rear face of a swing frame 5 which is separately formed with respect to the enclosure 1 and which is pivotally mounted with respect to the enclosure about vertical axes adjacent one side wall 4 of the enclosure by means of two vertically spaced hinge assemblies 6.

Each hinge assembly 6 comprises a rigid elongate link 7 which extends substantially horizontally and which, at one of its ends, is pivotally mounted with respect to one side wall 4 of the enclosure 1 about a fixed pivotal axis 8 adjacent the side wall and near the front face of the enclosure by means of a multi-leaf hinge 9 and, at the other of its ends, is pivotally mounted with respect to the swing frame 5 about a movable pivotal axis 10 fixed with respect to the swing frame 5 and lying outside the swing frame in a plane bisecting the adjacent corner of the frame by means of a multi-leaf hinge 11.

Each of the hinges 9 and 11 comprises three leaves pivotally mounted on a vertical rod, the middle leaf of each hinge being secured to the rigid link 7, the upper and lower leaves of the hinge 9 being secured to the support member 3 and the upper and lower leaves of the hinge 11 being secured to a side wall of the swing frame 5. The fixed pivotal axis 8 is so spaced inwardly of the front face 2 of the enclosure 1 that when the rigid link 7 of each hinge assembly 6 lies substantially parallel to the adjacent side wall 4 of the enclosure, the link will protrude beyond the front face of the enclosure and the movable pivotal axis 10, fixed with respect to the swing frame 5, will lie outside the enclosure. The swing frame 5 has protruding from its front face a pair of transversely spaced endless metal loops 12 to which electric cables can be readily secured.

To remove the swing frame 5 from the enclosure 1 to provide access to electrical and/or electronic apparatus (not shown) supported on the rear face of the frame, the swing frame is first drawn forward towards the front face 2 of the enclosure with the front face of the swing frame substantially parallel to the front face of the enclosure so that each rigid link 7 of the hinge assembly 6 pivots in the same rotational direction about the fixed pivotal axis 8 and about the movable pivotal axis 10 until each rigid link lies substantially parallel to the adjacent side wall 4 of the enclosure. Thereafter, with each rigid link 7 maintained stationary, the swing frame 5 is rotated with respect to each rigid link about the movable pivotal axis 10 to swing the swing frame with the electrical and/or electronic apparatus supported thereon out of the enclosure so as to provide ready access to the apparatus.

The extent to which the internal width of the enclosure 1 must exceed the width of the swing frame 5 is determined by the length of each rigid link 7. The internal width of the internal enclosure 1 must be sufficient to enable the swing frame 5 to move forward towards the front face 2 of the enclosure with the front face of the swing frame substantially parallel to the front face of the enclosure through a position at which each rigid link 7 is itself substantially parallel to the front face of the enclosure. The extent to which the internal enclosure 1 must exceed the width of the swing frame 5 using the hinge assemblies 6 as described is substantially less than the extent to which the internal width of the enclosure must exceed the width of the swing frame if the same apparatus were supported on the swing frame and hinge assemblies hitherto proposed had been used.

**Claims**

1. An enclosure housing electrical and/or electronic apparatus directly or indirectly supported on a swing frame, wherein the swing frame (5) is pivotally mounted with respect to a side wall (4) of the enclosure (1) by at least one hinge assembly (6) comprising at least one substantially rigid elongate link (7) which, at one of its ends, is pivotally mounted with respect to said side wall about a fixed substantially vertical axis (the "fixed pivotal axis") (8) adjacent said side wall and near the front face (2) of the enclosure and which, at the other of its ends, is pivotally mounted with respect to the swing frame about a substantially vertical axis fixed with respect to the swing frame (the "movable pivotal axis") (10) at or near the adjacent corner of the swing frame.

2. An enclosure as claimed in Claim 1, wherein the fixed pivotal axis (8) is positioned inwardly from the front face (2) of the enclosure and the or each rigid link (7) is of such a length that, when the link lies substantially parallel to said side wall (4) of the enclosure, the link protrudes beyond the front face of the enclosure and the movable pivotal axis (10) is positioned outside the enclosure.

3. An enclosure as claimed in Claim 1 or 2, wherein the movable pivotal axis (10) is so fixed with respect to the swing frame (5) that it lies outside the swing frame in a plane bisecting said adjacent corner of the frame.

4. An enclosure as claimed in any one of the preceding Claims, wherein the swing frame (5) is pivotally mounted with respect to said side wall (4) of the enclosure (1) by at least two separately formed vertically spaced hinge assemblies (6).

5. An enclosure as claimed in any one of the preceding Claims, wherein one end of the or each rigid elongate link (7) of the or each hinge assembly (6) is pivotally mounted with respect to said side wall (4) of the enclosure by a multi-leaf hinge (9) and the other end of said rigid elongate link is pivotally mounted with respect to the swing frame (5) by a multi-leaf hinge (11), at least one leaf of each hinge being secured to the rigid elongate link and at least one leaf of one hinge being directly or indirectly secured to said side wall of the enclosure and at least one leaf of the other hinge being secured to a side wall of the swing frame.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-U-7628374 (SIEMENS AG) <br> * page 3, paragraph 3 - page 5, paragraph 2; figure 1 * | 1, 3 | H02B1/32 |
| X | DE-U-7127792 (SIEMENS AG) <br> * page 2, last paragraph - page 3, paragraph 1; figures 1, 2 * | 1, 3 | |
| A | FR-A-1332712 (COMMISSARIAT A L'ENERGIE ATOMIQUE) <br> * pages 2 - 3; figures 1-3 * | 1, 3, 4 | |
| A | FR-A-2590416 (ALSTHOM) <br> * page 5, line 1 - page 6, line 8; figures 5, 6A-D * | 1 | |

TECHNICAL FIELDS SEARCHED (Int. Cl.5)

H02B
H05K

The present search report has been drawn up for all claims

| Place of search | Date of completion of the search | Examiner |
|---|---|---|
| THE HAGUE | 16 FEBRUARY 1990 | WOODALL C.G. |